# EUROPÄISCHE PATENTANMELDUNG

(11) **EP 1 095 843 A2**
(43) Veröffentlichungstag der Anmeldung: **02.05.2001**
(21) Anmeldenummer: 00121523.5
(22) Anmeldetag: 30.09.2000
(51) Int. Cl.: B62D 25/06, B62D 65/00, B60R 13/02

(54) **Fahrzeugdach, insbesondere Kraftfahrzeugdach**

(30) Priorität: 26.10.1999 DE 19951659
(71) Anmelder: Meritor Automotive GmbH, 60314 Frankfurt (DE)
(72) Erfinder: Grimm, Rainer, Dipl.-Ing., 60599 Frankfurt (DE); Böhm, Horst, Dipl.-Ing., 60599 Frankfurt (DE); Becher, Thomas, Dipl.-Ing., 63110 Rodgau (DE)
(74) Vertreter: Oppermann, Mark, Dipl.-Ing.

(57) **Zusammenfassung**

Für ein Kraftfahrzeugdachmodul, das sandwichartig vorzugsweise aus einer starren Dachhaut (2) und einer auf deren Innenfläche aus PUR-Kunststoff aufgeschäumten Innenschale (1) aufgebaut ist, wird vorgeschlagen, im einschichtigen Bereich der Innenschale (1) Vertiefungen (11) beim Schäumvorgang einzuformen, in welche Funktionsteile, wie Lautsprecher, gehäuselos eingesetzt und darin durch Verrasten befestigt werden können.

## Beschreibung

Die Erfindung bezieht sich auf ein Fahrzeugdach, insbesondere Kraftfahrzeugdach, entsprechend dem Oberbegriff des Patentanspruchs 1.

Derartige modulartig einbaufertig vorgefertigte Fahrzeugdächer werden getrennt von der Fahrzeugkarosserie fertiggestellt und erst am Montageband in der Automobilfabrik mit der Fahrzeugkarosserie vereinigt. Insbesondere wegen der erheblichen Verkürzung der Montagezeit am Montageband erfreuen sich solche Fahrzeugdachmodule zunehmender Bedeutung.

Bei einem bekannten Fahrzeugdach (DE 197 09 016 A1) der im Oberbegriff des Anspruchs 1 angegebenen Ausbildung sind die nach unten umbiegbaren Bereiche der Innenschale an den dafür geeigneten Orten mit mindestens einem vormontierten Element aus der aus Sonnenblenden, Haltegriffen, Lüftungsgittern, Innenleuchten, stoßabsorbierenden Sicherheitselementen, Airbags u.dgl. bestehenden Gruppe bzw. mit vorbereiteten Anbringungsorten für mindestens eines dieser Elemente versehen. Soweit diese Elemente aufgrund ihrer Funktion im Bereich der Außenränder der Innenschale vorzusehen sind und/oder am Karosserierahmen zu befestigen sind, wie das beispielsweise für Sonnenblenden und Haltegriffe der Fall ist, sind diese Anbringungsorte an der Innenschale vorgegeben. Die Vormontage der Elemente kann aufgrund der leicht biegbaren zunächst etwas labilen unteren Schicht und/oder durch das Gewicht bzw. die Abmessungen der Elemente erschwert sein.

Der vorliegenden Erfindung liegt die Aufgabe zugrunde, unter Beibehaltung einer mindestens weitgehenden Vormontage aller Funktionselemente am Fahrzeugdachmodul diese Vormontage zu erleichtern.

Diese Aufgabe wird erfindungsgemäß durch die Merkmale des Anspruchs 1 gelöst. Nach dem Grundgedanken der Erfindung wird die Innenschale in ihrem festen nicht in zwei Schichten aufgeteilten Bereich in die Vormontage von Funktionselementen einbezogen. Hierbei werden bei dem die Innenschale bildenden Schäumvorgang nach unten offene (bezogen auf das eingebaute Dachmodul) Vertiefungen eingeformt, deren Abmessungen dem jeweils zu montierenden Funktionselement angepaßt sind. Auf diese Weise lassen sich bestimmte Funktionselemente wie Lampen, Schalter etc. bedienerfreundlich an allen Orten der festen Innenschale anbringen. Auch an sich schwerere Funktionselemente wie Lautsprecher können auf diese Weise vormontiert werden.

Die erfindungsgemäße Einbeziehung des festen Bereichs der Innenschale als Anbringungsort für vormontierte Funktionselemente ist, wie in Anspruch 2 angegeben, besonders vorteilhaft für solche Funktionselemente, die normalerweise auf ihrer der Sicht- und/oder Bedienungsseite abgekehrten Rückseite mit einem Schutz- und/oder Abdeckgehäuse versehen sind. Die Erfindung ermöglicht es, solche Funktionselemente ohne Gehäuse herzustellen und/oder ohne Gehäuse in die eingeformten Vertiefungen einzusetzen, weil die Vertiefungen nach der Montage selbst die Gehäuse bilden. Dadurch wird nicht nur die Montage erleichtert, sondern zugleich auch an Gewicht gespart.

Ist das vorzumontierende Funktionselement eine Lampe, kann entsprechend Anspruch 3 ein im wesentlichen aus dem Reflektor und der Glühlampenfassung bestehender Teil der Lampe fest in den Schaumkunststoff des festen Innenhimmels eingeschäumt sein, während nur die transparente Abdeckscheibe als getrenntes Teil in die eingeformte Vertiefung einsetzbar ist und somit allein das lösbar eingesetzte Funktionselement bildet.

Zur Montageerleichterung können die Funktionselemente vorteilhaft entsprechend Anspruch 4 mit Rastelementen versehen sein, die mit in bzw. an den eingeformten Vertiefungen vorgesehenen, vorzugsweise bei der Formung der Innenschale angeformten, Gegenelementen in lösbarer Weise verrastbar sind. Eine sichere Verrastung wird bei der in Anspruch 5 vorgesehenen Ausbildung auf einfache Weise erreicht, wenn die Rastelemente hakenartig ausgebildet sind, während die Gegenelemente an der Innenschale Stufenvorsprünge od.dgl. sind, die bei der Schäumbildung der Innenschale gebildet sind.

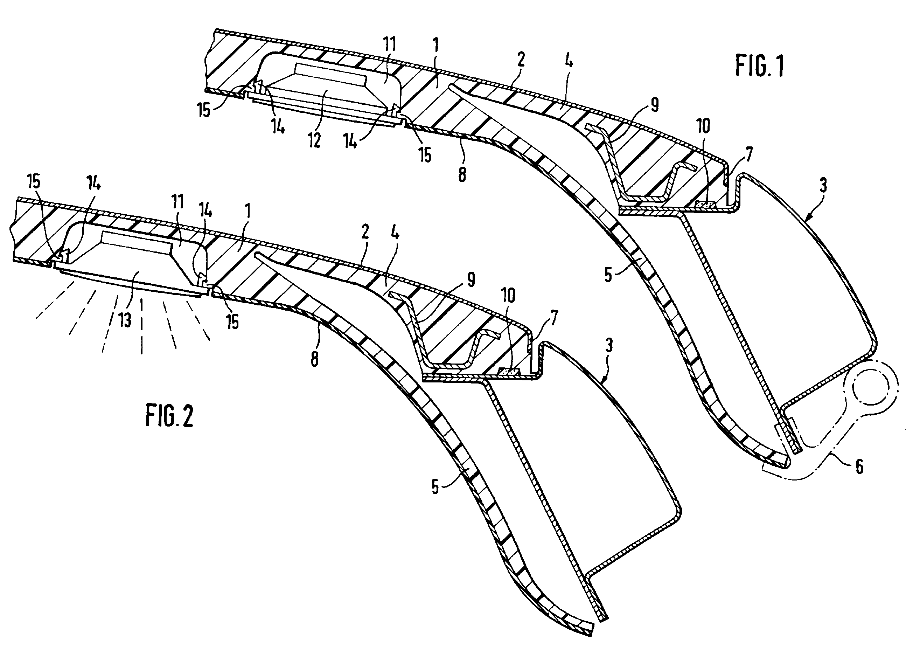

Weitere Einzelheiten der Erfindung werden nachfolgend anhand der Ausführungsbeispiele darstellenden Zeichnungen näher erläutert. Alle Figuren 1 bis 5 zeigen abgebrochene Schnittansichten durch einen der beiden seitlichen Bereiche eines Dachmoduls, das auf einen Karosserierahmen aufgelegt und daran befestigt ist. Im einzelnen stellen dar
- Fig. 1: einen Schnitt durch ein Dachmodul mit vormontiertem Lautsprecher,
- Fig. 2: einen Schnitt durch ein Dachmodul mit vormontierter Lampeneinheit,
- Fig. 3: einen Schnitt durch ein Dachmodul mit eingeschäumtem Lampenteil und davon getrennter Abdeckscheibe,
- Fig. 4: einen Schnitt durch ein Dachmodul mit vormontiertem elektrischen Schalter und
- Fig. 5: einen Schnitt durch ein Dachmodul mit vormontiertem Lüftungsgitter.

Bei allen gezeigten Ausführungsbeispielen ist die Innenschale 1 des Dachmoduls aus einem Schaumkunststoff gebildet, der auf eine starre Dachhaut 2 aufgeschäumt ist. Die starre Dachhaut 2 besteht aus einem tiefgezogenen Metallblech, beispielsweise Aluminiumblech, oder kann aus einer vakuumverformten Kunststoffolie gebildet sein. Die Erfindung ist aber auch bei Dachmodulausführungsformen anwendbar, bei denen keine feste Dachhaut vorgesehen ist. Hierbei besteht das Dachmodul im wesentlichen aus einem harten schalenförmig und eigensteif geformten Schaumkunststoff mit glatter lackierter Außenfläche.

Die Innenschale 1 ist bei allen Ausführungsbeispielen im Bereich der zur Auflage auf den Karosserierahmen 3 vorgesehenen Außenränder in zwei Schichten aufgeteilt, von denen die obere Schicht 4 auf den Karosserierahmen 3 aufgelegt ist, während die untere Schicht 5 über die Außenränder des Fahrzeugdachs übersteht und für den Durchtritt durch die von dem Karosserierahmen 3 begrenzte Karosserieöffnung nach unten ohne bleibende Deformationen umbiegbar ist. Die untere Schicht 5 ist zur Anlage an den Karosserierahmen 3 und zur Befestigung daran, beispielsweise über an den Karosserierahmen anzuschraubende Funktionselemente (nicht dargestellt), ausgebildet. Die Verbindung zwischen der unteren Schicht 5 und dem Karosserierahmen 3 kann ein nur in Fig. 1 in strichpunktierten Linien schematisch dargestellter Verbindungskeder 6 übernehmen, der zugleich einen Hohlkammerabschnitt zur Abdichtung der benachbarten Fahrzeugtür (nicht dargestellt) gegenüber dem Karosserierahmen 3 aufweisen kann.

Geeignete Werkstoffe für die Innenschale 1 sind Hartschaumkunststoffe auf PUR-Basis, die durch dem Kunststoff vor dem Aufschäumen einverleibte Faserstoffe, beispielsweise Glasfaserabschnitte, armiert sein können. Aber auch in die Schäumform eingelegte Gewebe, Gewirke, Vliese u. dgl. sind als Armierung geeignet. Durch das Aufschäumen der armierten Innenschale 1, deren obere Schicht 4 bis zu einer Randabkantung 7 der Dachhaut 2 reicht, entsteht ein sandwichartiges Verbunddachmodul hoher Formbeständigkeit und Festigkeit. Alle Innenkonturen der Innenschale 1 einschließlich der unteren Schicht 5 werden durch entsprechende Formgebung der Schäumform (nicht dargestellt) gebildet.

Die Innenfläche der Innenschale 1 kann zur Ausbildung eines Dachhimmels mit einem textilen oder folienartigen Bezugmaterial 8 beschichtet sein. In die obere Schicht 5 kann ein Verstärkungsteil 9 in Form eines durchgehenden Profils in den Schaumstoff eingebettet sein. Dieses Verstärkungsteil 9 kann der Befestigung des Dachmoduls an dem Karosserierahmen 3 dienen (nicht dargestellt). Im übrigen ist die im Bereich der Auflage auf den Karosserierahmen 3 verdickte obere Schicht 4 bei allen gezeichneten Ausführungsbeispielen mit einer umlaufend eingeformten Aufnahmenut versehen, in welcher eine das Dachmodul gegenüber dem Karosserierahmen 3 abdichtende und daran befestigende Kleberraupe 10 Aufnahme findet.

Bei den in den Figuren 1 und 2 dargestellten Ausführungsbeispielen ist die Innenschale 1 in ihrem festen Bereich, d.h. dort, wo sie nicht in zwei Schichten 4 und 5 aufgeteilt ist, mit einer von der Dachhimmelfläche ausgehenden Vertiefung 11 versehen, in welche im Fall der Fig. 1 ein Lautsprecher 12 und im Fall der Fig. 2 eine komplette Lampeneinheit 13 Aufnahme findet. Lautsprecher 12 und Lampeneinheit 13 sind jeweils mit einer Mehrzahl von gleichmäßig an ihrem Umfang verteilten Rastelementen 14 versehen, die elastisch biegbar, d.h. federnd, und hakenartig ausgebildet sind.

Mindestens an den Stellen der Rastelemente 14 sind die Vertiefungen 11 jeweils mit an- bzw. eingeformten Stufenvorsprüngen 15 versehen, hinter welchen die Rastelemente 14 einrasten, wenn der Lautsprecher 12 bzw. die Lampeneinheit 13 bis zum Anschlag ihres Umfangsrandes an eine zugeordnete Anschlagringfläche der Innenschale 1 eingeschoben werden. Auf diese Weise entsteht eine sichere Befestigung des betreffenden Funktionselements an der Innenschale 1. Selbstverständlich ist die Anordnung so getroffen, daß die unteren Sichtflächen der jeweiligen Funktionselemente nicht oder nicht wesentlich über die Dachhimmelfläche nach unten vorstehen. Die Stufenvorsprünge 15 können auch Bestandteil einer umlaufend angeordneten Ringschulter sein, die aus der Umfangswand der Vertiefung 11 nach innen vorspringt. An den Stellen der beschriebenen Funktionselemente ist bei den Ausführungsbeispielen nach den Figuren 1 und 2 das Bezugsmaterial 8 mit einem entsprechenden Ausschnitt versehen. Die nicht dargestellten elektrischen Leitungen, an denen der Lautsprecher 12 bzw. die Lampeneinheit 13 angeschlossen sind, können schon beim Aufschäumen der Innenschale mit eingeschäumt sein und enden jeweils in der Vertiefung 11.

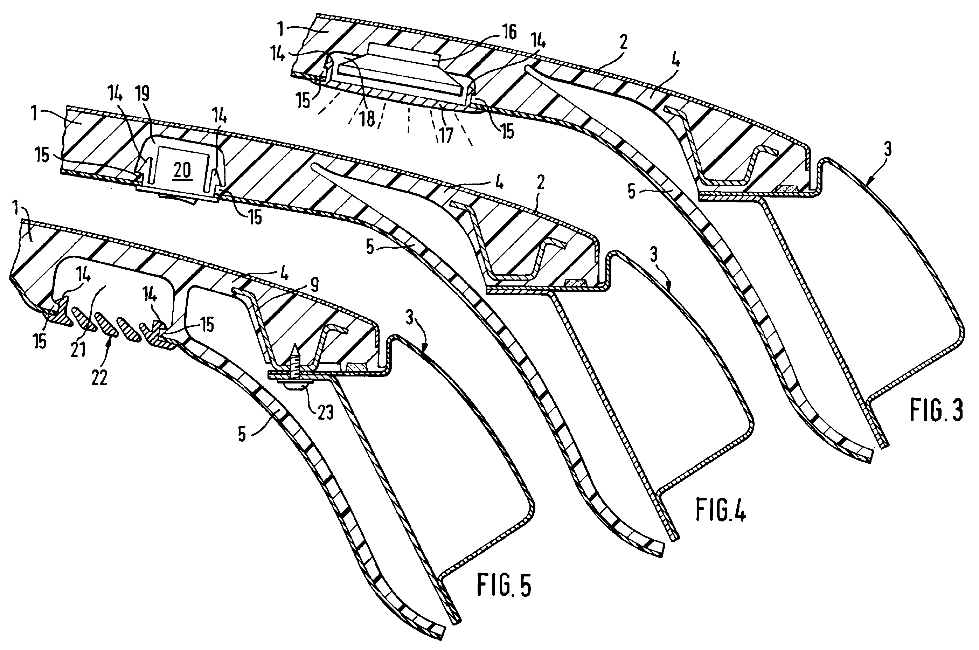

Bei dem Ausführungsbeispiel gemäß Fig. 3 ist eine Lampeneinheit zweiteilig ausgebildet, d.h. sie besteht einerseits aus einem Oberteil 16 umfassend im wesentlichen den Reflektor und die Glühlampenfassung und andererseits aus einer transparenten Abdeckscheibe 17. Während das Oberteil 16 bei der Formung der Innenschale 1 wenigstens partiell mit eingeschäumt wird, wie das aus Fig. 3 hervorgeht, ist die transparente Abdeckscheibe 17 auf die bereits mit Bezug auf die Figuren 1 und 2 beschriebene Weise mit Rastelementen 14 versehen, die mit Stufenvorsprüngen 15 am Umfang der Vertiefung 18 verrastbar sind.

Beim Ausführungsbeispiel nach Fig. 4 ist in der mit ihren Abmessungen entsprechend angepaßten Vertiefung 19 ein Schalter 20 eingesetzt, der auf die schon beschriebene Weise mittels Rastelementen 14 mit Stufenvorsprüngen 15 verrastet ist. Wie schon mit Bezug auf die Ausführungsbeispiele 1 und 2 beschrieben, sind auch bei den Ausführungsbeispielen nach den Figuren 3 und 4 elektrische Leitungen in den Schaumstoff der Innenschale 1 eingeschäumt und enden in den Vertiefungen 18 bzw. 19.

Bei dem Ausführungsbeispiel entsprechend Fig. 5 ist die Vertiefung 21 Teil eines (nicht dargestellten) Luftkanalsystems, durch welches Frischluft oder klimatisierte Luft dem Innenraum des Kraftfahrzeugs zugeführt werden kann. Auch eine Luftabsaugung aus dem Innenraum des Kraftfahrzeugs kann auf diese Weise erfolgen. Vertiefung 21 und zugehöriges Kanalsystem sind in die Innenschale 1 bei deren Schäumformung eingeformt. Die runde oder langgestreckte untere Öffnung der Vertiefung 21 wird durch ein Lüftungsgitter 22 verschlossen, welches mit Rastelementen 14 versehen sein kann, wodurch das Lüftungsgitter 22 auf die schon beschriebene Weise mit Stufenvorsprüngen 15 an bzw. in der Vertiefung 21 verrastet werden kann. Im übrigen kann das Dachmodul gemäß dem Ausführungsbeispiel nach Fig. 5 so ausgebildet sein, wie das mit Bezug auf die Figuren 1 und 4 beschrieben worden ist. Im gezeichneten Beispiel allerdings ist das Verstärkungsteil 9 nicht vollständig in den verdickten Bereich der oberen Schicht 4 eingebettet, sondern liegt mit seiner Unterfläche frei, so daß das Verstärkungsteil 9 unmittelbar dem Karosserierahmen 3 anliegt. Selbstverständlich können die aus den Figuren 1 bis 4 ersichtlichen Dachmodule entsprechend ausgebildet sein. Am Beispiel der Fig. 5 ist gezeigt, wie das Dachmodul über Schrauben 23 mit dem Karosserierahmen 3 verbunden sein kann.

Die beschriebenen und gezeichneten Ausführungsbeispiele lassen erkennen, daß insbesondere solche Funktionselemente in entsprechend ausgebildete Vertiefungen einsetzbar sind, die im Regelfall ein Gehäuse aufweisen, jedoch ohne Gehäuse einsetzbar ausgebildet sind. Hierbei umschließen die in den Schaumkunststoff eingeformten Vertiefungen die rückwärtigen Bereiche der Funktionselemente gehäuseartig.

Für ein Kraftfahrzeugdachmodul, das sandwichartig vorzugsweise aus einer starren Dachhaut und einer auf deren Innenfläche aus PUR-Kunststoff aufgeschäumten Innenschale aufgebaut ist, wird vorgeschlagen, im einschichtigen Bereich der Innenschale Vertiefungen beim Schäumvorgang einzuformen, in welche Funktionsteile, wie Lautsprecher, gehäuselos eingesetzt und darin durch Verrasten befestigt werden können.

## Patentansprüche

1. Fahrzeugdach, insbesondere Kraftfahrzeugdach, das sandwichartig und an seiner aus Schaumkunststoff geformten Innenschale (1) als Dachhimmel ausgebildet, getrennt von der Fahrzeugkarosserie hergestellt, mit seinen Außenrändern auf einen Karosserierahmen (3) auf legbar und mit diesem fest verbindbar ist, wobei die Innenschale (1) im Bereich der zur Auflage auf den Karosserierahmen (3) vorgesehenen Außenränder in zwei Schichten aufgeteilt ist, von denen die obere Schicht (4) auf den Karosserierahmen (3) auflegbar ist, während die untere Schicht (5) nach unten umbiegbar und zur Verkleidung des Karosserierahmens (3) ausgebildet ist, wobei weiterhin an der Innenschale (1) an dafür geeigneten Orten vormontierte Funktionselemente angebracht sind, **dadurch gekennzeichnet**, daß im Bereich der nicht in zwei Schichten aufgeteilten Innenschale (1) von der Dachhimmelfläche ausgehend Vertiefungen (11, 18, 19, 21) eingeformt sind, in welche Funktionselemente (12, 13, 16/17, 20, 22) lösbar eingesetzt sind.

2. Fahrzeugdach nach Anspruch 1, **dadurch gekennzeichnet**, daß insbesondere solche Funktionselemente einsetzbar sind, die im Regelfall ein Gehäuse aufweisen, jedoch ohne Gehäuse einsetzbar ausgebildet sind, wobei die Innenflächen der in den Schaumkunststoff eingeformten Vertiefungen (11, 18, 19, 21) die rückwärtigen Bereiche der Funktionselemente gehäuseartig umschließen.

3. Fahrzeugdach nach Anspruch 1 oder 2, **dadurch gekennzeichnet**, daß bei einer Lampe der Reflektor mit Glühlampenfassung (Oberteil 16) fest in den Schaumkunststoff eingeformt ist, während nur die transparente Abdeckscheibe (17) das lösbar einsetzbare Funktionselement bildet.

4. Fahrzeugdach nach einem der Ansprüche 1 bis 3, **dadurch gekennzeichnet**, daß die Funktionselemente (12, 13, 17, 20, 22) mit daran befestigten elastisch biegbaren Rastelementen (14) mit in den Vertiefungen (11, 18, 19, 21) vorgesehenen Gegenelementen (15) beim Einsetzen verrastbar sind.

5. Fahrzeugdach nach Anspruch 4, **dadurch gekennzeichnet**, daß die elastisch biegbaren Rastelemente (14) hakenartig und die Gegenelemente in bzw. an den Vertiefungen (11, 18, 19, 21) nach Art von an- bzw. eingeformten Stufenvorsprüngen (15) ausgebildet sind.
